# EUROPÄISCHE PATENTSCHRIFT

(11) **EP 1 560 862 B1**
(45) Veröffentlichungstag und Bekanntmachung des Hinweises auf die Patenterteilung: **12.12.2007**
(21) Anmeldenummer: 03769318.1
(22) Anmeldetag: 25.09.2003
(51) Int. Cl.: C08G 18/10, C08G 18/48, C09D 175/12

(54) **ZWEIKOMPONENTEN-SYSTEME FUR DIE HERSTELLUNG ELASTISCHER BESCHICHTUNGEN**
TWO-COMPONENT SYSTEMS FOR PRODUCING ELASTIC COATINGS
SYSTEMES DE REVETEMENT A DEUX COMPOSANTS POUR LA PRODUCTION DE REVETEMENTS ELASTIQUES

(30) Priorität: 07.10.2002 DE 10246707
(43) Veröffentlichungstag der Anmeldung: 10.08.2005
(73) Patentinhaber: Bayer MaterialScience AG, 51368 Leverkusen (DE)
(72) Erfinder: NIESTEN, Meike, 51061 Köln (DE); SCHMALSTIEG, Lutz, 50676 Köln (DE); SIMON, Joachim, 41515 Grevenbroich (DE)
(86) Internationale Anmeldenummer: PCT/EP2003/010663
(87) Internationale Veröffentlichungsnummer: WO 2004/033518

(56) Entgegenhaltungen:
- EP-A- 0 741 152
- EP-B- 1 066 332
- US-A- 4 581 433

## Beschreibung

Die vorliegende Erfindung betrifft Zweikomponenten-Beschichtungssysteme mit verlängerter Topfzeit für die Herstellung von elastischen Beschichtungen. Die Beschichtungssysteme umfassen Polyurethan-Prepolymere basierend auf in Gegenwart von Doppelmetallcyanid(DMC)-Katalysatoren hergestellten Polyether-Polyolen sowie sterisch gehinderte aromatische Diamine als Härter.

Zweikomponenten-Beschichtungssysteme auf Polyurethan- oder Polyharnstoff-Basis sind bekannt und werden in der Technik eingesetzt. In der Regel enthalten sie eine flüssige Polyisocyanat-Komponente und eine flüssige Isocyanat-reaktive Komponente. Durch Reaktion von Polyisocyanaten mit Aminen als Isocyanat-reaktive Komponente entstehen stark vernetzte lösemittelfreie Polyharnstoff-Beschichtungen. Primäre Amine und Isocyanate reagieren jedoch meistens sehr schnell miteinander. Typische Topf- oder Gelierzeiten betragen oft nur einige Sekunden bis wenige Minuten. Deshalb können solche Polyharnstoff Beschichtungen nicht manuell, sondern nur mit speziellen Spritzapparaturen appliziert werden. Solche Beschichtungen besitzen jedoch ausgezeichnete physikalische Eigenschaften. Die Reaktion zwischen Polyisocyanaten und Aminen kann verzögert werden durch Verwendung von sekundären Aminen, jedoch sind die Topfzeiten für eine manuelle Applikation immer noch zu gering.

Eine aus der Literatur bekannte Methode, die Reaktivität zu reduzieren, ist die Verwendung von Prepolymeren mit niedrigen NCO-Gehalt. Systeme auf Basis von Polyoxypropylenpolyolen besitzen jedoch keine ausreichende mechanische Stabilität. Prepolymere auf Basis von Polyoxytetramethyleneglykol, die aus US-A 4 581 433 hervorgehen, kristallisieren bei Raumtemperatur und sind daher ungeeignet für Beschichtungszusammensetzungen.

US-A 3 428 610 und US-A 4 463 126 offenbaren die Herstellung von Polyurethan/Polyharnstoff-Elastomeren durch Aushärtung von NCO-funktionellen Prepolymeren mit aromatischen Diaminen. Bevorzugt sind dies di-primäre aromatische Diamine, welche in ortho-Position zu jeder Aminogruppe mindestens einen Alkylsubstituenten mit 2-3 Kohlenstoffatomen und gegebenenfalls außerdem in weiteren ortho-Positionen zu den Aminogruppen Methylsubstituenten aufweisen, wie zum Beispiel Diethyltoluylendiamin (DETDA). Für solche Systeme gilt aber, dass bei hohen NCO-Gehalten die Topfzeit relativ kurz ist, bei niedrigen NCO-Gehalten hingegen die mechanische Stabilität unzureichend ist.

US-A 4 463 126 beschreibt ein Verfahren zur Herstellung von lösemittelfreien elastischen Beschichtungen, bei dem auf Isophorondiisocyanat (IPDI) und Polyether-polyolen basierende NCO-Prepolymere bei Raumtemperatur mit sterisch gehinderten di-primären aromatischen Diaminen ausgehärtet werden. Bei Verwendung von Prepolymeren mit sehr niedrigem NCO-Gehalt sind aber die mechanischen Eigenschaften solcher Beschichtungen nicht zufriedenstellend.

Es wurden nun Beschichtungsmittel gefunden, die ausreichend lange Topfzeiten aufweisen, um auch eine manuelle Applikation zu ermöglichen, und mit denen sich elastische Beschichtungen mit verbesserten mechanischen Eigenschaften herstellen lassen.

Gegenstand der Erfindung sind Zweikomponenten-Beschichtungssysteme, enthaltend
(i) ein freie Isocyanatgruppen aufweisendes Prepolymer mit einem NCO-Gehalt von 0,4 bis 12 Gew.-%, vorzugsweise 1 bis 7 Gew.-%, besonders bevorzugt 1,5 bis 4 Gew.-%, erhältlich durch Umsetzung eines Di- oder Polyisocyanats mit einem oder mehreren durch Alkoxylierung hydroxyfunktioneller Startermoleküle in Gegenwart von Doppelmetallcyanid (DMC)-Katalysatoren erhältlichen Polyoxyalkylenpolyolen mit einer mittleren Hydroxyfunktionalität von 1,96 bis 6, bevorzugt 1,96 bis 3 und einem Äquivalentgewicht von mindestens 250 g/Mol, und
(ii) ein di-primäres aromatisches Diamin, das in ortho-Position zu jeder Aminogruppe mindestens einen Alkylsubstituenten mit 2-3 Kohlenstoffatomen und gegebenenfalls außerdem in weiteren ortho-Positionen zu den Aminogruppen Methylsubstituenten aufweist.

Die Isocyanatkomponente (i) ist ein Isocyanatgruppen aufweisendes Prepolymer mit einem NCO-Gehalt von 0,4 bis 12 Gew.-%, vorzugsweise 1 bis 7 Gew.-%, besonders bevorzugt 1,5 bis 4 Gew.-%, das erhältlich ist durch Umsetzung mindestens eines Polyisocyanats mit einem oder mehreren Polyoxyalkylenpolyolen, die durch Alkoxylierung von hydroxyfunktionellen Starterverbindungen mit einem oder mehreren Alkylenoxid(en), bevorzugt Propylenoxid oder Gemischen aus Propylenoxid und Ethylenoxid, in Gegenwart von DMC-Katalysatoren erhältlich sind und eine mittlere Hydroxyfunktionalität von 1,96 bis 6, bevorzugt 1,96 bis 3 und ein Äquivalentgewicht von mindestens 250 g/mol bzw. ein zahlenmittleres Molekulargewicht von 500 bis 20000, vorzugsweise 1000 bis 8000, besonders bevorzugt 2000 bis 6000 g/mol aufweisen.

Geeignete DMC-Katalysatoren für die Polyaddition von Alkylenoxiden an aktive Wasserstoffatome aufweisende Starterverbindungen sind bekannt. Bevorzugt werden die Polyoxyalhylenpolyole für die Herstellung der erfindungsgemäßen Prepolymere (i) DMC-Katalysatoren auf der Basis von Zinkhexacyanocobaltat eingesetzt, insbesondere solche, die zusätzlich tert.-Butanol als organischem Komplexliganden (allein oder in Kombination mit einem Polyether) enthalten, wie sie EP-A 700 949, EP-A 761 708 und WO 97/40086 offenbaren. Mit diesen Katalysatoren lassen sich Polyoxyalkylenpolyole erhalten, die im Vergleich zu mit Alkalihydroxiden als Katalysator hergestellten Polyolen einen reduzierten Anteil an monofunktionellen Polyethern mit endständigen Doppelbindungen, sogenannten Monoolen, enthalten. Die erfindungsgemäß einzusetzenden Polyoxyalkylenpolyole weisen typischerweise Doppelbindungsgehalte von weniger als 50 mmol/kg, bevorzugt weniger als 20 mmol/kg und insbesondere weniger als 10 mmol/kg auf.

Als Polyisocyanate kommen aromatische, aliphatische und cycloaliphatische Polyisocyanate in Betracht. Geeignete Polyisocyanate sind Verbindungen der Formel Q(NCO)ₙ mit einem zahlenmittleren Molekulargewicht von weniger als 800 g/mol, worin n eine Zahl von 2 bis 4 und Q einen aromatischen C₆-C₁₅-Kohlenwasserstoffrest, einen aliphatischen C₄-C₁₂-Kohlenwasserstoffrest oder einen cycloaliphatischen C₆-C₁₅-Kohlenwasserstoffrest bedeuten. Beispiele sind Diisocyanate wie Toluylendiisocyanat (TDI), Methylendiphenyldiisocyanat (MDI), Triisocyanatononan (TIN), Naphtyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexylmethan, 4,4'-Diisocyanato-2,2-dicyclohexylpropan, 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m-xylylen-diisocyanat oder α,α,α',α'-Tetramethyl-p-xylylen-diisocyanat (TMXDI) sowie aus diesen Verbindungen bestehende Gemische.

Bevorzugt sind cycloaliphatische oder aromatische Diisocyanate, besonders bevorzugt sind Isocyanatomethyl-3,3,5-trimethylcyclohexylisocyanat (IPDI), 2,4-Toluylendiisocyanat bzw. 2,6-Toluylendiisocyanat (TDI) und Methylendiphenyldiisocyanat (MDI), sowie aus diesen Verbindungen bestehende Gemische.

Zur Herstellung der NCO-Prepolymeren werden das Polyisocyanat und das Polyoxyalkylenpolyol oder Gemische daraus unter Einhaltung eines NCO/OH Äquivalentverhältnisses von 1,5:1 bis 10:1 unter Urethanbildung umgesetzt. Die Umsetzung findet statt bei Temperaturen von 40 bis 140°C, vorzugsweise 50 bis 110°C. Bei Verwendung eines Überschusses an Polyisocyanat von mehr als 2:1 wird überschüssiges monomeres Polyisocyanat nach der Umsetzung durch in der Technik übliche destillative oder extraktive Verfahren (z.B. Dünnschichtdestillation) entfernt.

Die Umsetzung kann beschleunigt werden durch Verwendung eines die Urethanbildung beschleunigenden Katalysators. Gebräuchliche Katalysatoren sind Organometallverbindungen, Amine (z.B. tertiäre Amine) oder Metallverbindungen wie Bleioktoat, Quecksilbersuccinat, Zinnoktoat oder Dibutylzinndilaurat. Es werden vorzugsweise 0,001 bis 5 Gew.-%, insbesondere 0,002 bis 2 Gew.-% Katalysator bzw. Katalysatorkombination, bezogen auf das Gesamtgewicht des Prepolymeransatzes, verwendet.

Bei der Härterkomponente (ii) handelt es sich um di-primäre aromatische Diamine, die in ortho-Stellung zu jeder Aminogruppe mindestens einen Alkylsubstituenten mit 2 bis 3 Kohlenstoffatomen und gegebenenfalls zudem in weiteren ortho-Positionen zu den Aminogruppen Methyl-Substituenten aufweisen. Diese Verbindungen weisen bevorzugt ein Molekulargewicht von 178 bis 346 auf. Typische Beispiele derartiger aromatische Diamine sind 1-Methyl-3,5-diethyl-2,4-diaminobenzol, 1-Methyl-3,5-diethyl-2,6-diaminobenzol, 1,3,5-Triethyl-2,6-diaminobenzol, 3,5,3',5'-Tetraethyl-4,4-diamino-diphenylmethan, 3,5,3'5'-Tetraisopropyl-4,4'-diaminodiphenylmethan, 3,5-Diethyl-3'5'-diisopropyl-4,4'-diamino-di-phenylmethan oder beliebige Gemische derartiger Diamine.

Gegenstand der Erfindung sind auch Beschichtungsmittel, die erhältlich sind durch Umsetzung der Komponenten (i) und (ii), wobei diese in solchen Mengen eingesetzt werden, dass das Äquivalentverhältnis der Isocyanatgruppen der Komponente (i) zu den Aminogruppen der Komponente (ii) 0,5:1 bis 1,5:1, vorzugsweise 0,9:1 bis 1,5:1 beträgt.

Zur Herstellung der erfindungsgemäßen Beschichtungsmittel werden die Einzelkomponenten und gegebenenfalls mitzuverwendende Hilfs- und Zusatzmittel miteinander vermischt. Die Reaktionsgemische reagieren bereits bei Raumtemperatur zu Polyharnstoffen aus und weisen deswegen nur eine begrenzte Topfzeit auf. Innerhalb dieser Topfzeit müssen die Reaktionsgemische verarbeitet werden. Die erfindungsgemäßen Beschichtungsmittel weisen bei 23°C eine Topfzeit von 30 bis 100 Minuten, vorzugsweise 45 bis 90 Minuten auf, wobei Topfzeit definiert ist als der Zeitraum, in dem die Beschichtung homogen, ohne Fäden zu ziehen, applizierbar ist.

Beispiele für gegebenenfalls bei der Herstellung der erfindungsgemäßen Beschichtungsmittel mitzuverwendende Hilfs- und Zusatzmittel sind Pigmente, Füllstoffe, Weichmacher wie Steinkohlenteer, oder Verlaufshilfsmittel.

Die erfindungsgemäßen Zwei-Komponenten-Bindemittel eignen sich insbesondere zur Herstellung von elastischen Beschichtungen. Die aus den erfindungsgemäßen Bindemitteln hergestellten Beschichtungsmittel können nach an sich bekannten Methoden wie beispielsweise durch Spritzen, Streichen, Fluten oder mit Hilfe von Walzen oder Rakeln auf beliebige Substrate aufgetragen werden. Als Substrate eignen sich beispielsweise Metall, Holz, Glas, Stein, keramische Materialien, Beton, harte und flexible Kunststoffe, Textilen, Leder oder Papier.

Aus den erfindungsgemäßen Beschichtungsmitteln lassen sich Beschichtungen mit hervorragenden mechanischen Eigenschaften erhalten, die eine Härte von mindestens 40 Shore A und eine Bruchdehnung von mindestens 300 % aufweisen.

### Beispiele

Beispiele 1-3 beschreiben die Herstellung typischer Prepolymere.

### Beispiel 1

174 g (2 Äq.) 2,4-Toluylendiisocyanat (Desmodur® T100, Bayer AG) wurden bei 50°C unter Stickstoff vorgelegt. Ein Gemisch aus 1800 g (0,9 Äq.) eines Polyoxypropylenglykols mit einem zahlenmittleren Molekulargewicht von 4000 g/mol (Acclaim® 4200, Bayer AG) und 100 g (0,1 Äq.) eines Polyoxypropylenglykols mit einem zahlenmittleren Molekulargewicht von 2000 g/mol (Acclaim® 2200, Bayer AG) wurde so langsam zugetropft, dass die Temperatur nicht über 70°C anstieg. Nach 28 Stunden Rühren bei einer Reaktionstemperatur zwischen 60 und 70°C war der theoretisch berechnete NCO-Gehalt von 2,03 Gew.-% erreicht. Die Reaktion wurde beendet und das Produkt auf Raumtemperatur abgekühlt.

Das erhaltene NCO-Prepolymer hatte einen NCO-Gehalt von 2,00 Gew.-% und eine Viskosität von 6500 mPa.s bei 23°C.

### Beispiel 2

250 g (2 Äq.) eines Gemischs aus 65% 2,4'-Diphenylmethandiisocyanat und 35% 4,4'-Diphenylmethandüsocyanat (Desmodur® PU1806) wurden bei 60°C unter Stickstoff vorgelegt. Ein Gemisch aus 1200 g (0,6 Äq.) eines Polyoxypropylenglykols mit einem zahlenmittleren Molekulargewicht von 4000 g/mol (Acclaim® 4200, Bayer AG) und und 400 g (0,4 Äq.) eines Polyoxypropylenglykols mit einem zahlenmittleren Molekulargewicht von 2000 g/mol (Acclaim® 2200, Bayer AG) wurde so langsam zugetropft, dass die Temperatur nicht über 70°C anstieg. Nach 12 Stunden Rühren bei einer Reaktionstemperatur zwischen 60 und 70°C war der theoretisch berechnete NCO-Gehalt von 2,27 Gew.-% erreicht. Die Reaktion wurde beendet und das Produkt auf Raumtemperatur abgekühlt.

Das erhaltene NCO-Prepolymer hatte einen NCO-Gehalt von 2,20 Gew.-% und eine Viskosität von 25000 mPa.s bei 23°C.

### Beispiel 3

222 g (2 Äq.) 1-Isocyanato-3-isocyanatomethyl-3,5,5-trimethyl-cyclohexane (Desmodur® I, Bayer AG) wurden bei 60°C unter Stickstoff vorgelegt. Ein Gemisch aus 1400 g (0,7 Äq.) eines Polyoxypropylenglykols mit einem zahlenmittleren Molekulargewicht von 4000 g/mol (Acclaim® 4200, Bayer AG) und 600 g (0,3 Äq.) eines mit Glycerin gestarteten Polyoxypropylenpolyols mit einem zahlenmittleren Molekulargewicht von 6000 g/mol (Acclaim® 6300, Bayer AG) ) wurde so langsam zugetropft, dass die Temperatur nicht über 70°C anstieg. Nach dem Zutropfen wurden 0,0022 g (25 ppm) Dibutylzinnlaureat (DBTL) zugesetzt. Während der Reaktion wobei überstieg die Temperatur 70°C nicht. Nach 6 Stunden Rühren bei einer Reaktionstemperatur zwischen 60 und 70°C war der theoretisch berechnete NCO-Gehalt von 1,89 Gew.-% erreicht. Die Reaktion wurde beendet und das Produkt auf Raumtemperatur abgekühlt.

Das erhaltene NCO-Prepolymer hatte einen NCO-Gehalt von 1,80 Gew.-% und eine Viskosität von 17000 mPa.s bei 23°C.

Das nachfolgenden Beispiel beschreibt die Herstellung von Beschichtungen und deren Eigenschaften.

### Beispiel 4

In Analogie zu den Beispielen 1-3 hergestellte Prepolymere wurden bei Raumtemperatur mit einem Gemisch aus 80% 3,5-Diethyltoluyl-2,4-diamin und 20% 3,5-Diethyltoluyl-2,6-diamin (Härter DT Bayer AG Leverkusen) gehärtet, wobei ein NCO/NH₂ Verhältnis von 1,05:1 bzw. 1,2:1 eingehalten wurde. In Tabelle 1 sind die Topfzeiten und die mechanischen Eigenschaften der erhaltenen Beschichtungen zusammengestellt. Die Härte Shore A wurde nach DIN 53505 bestimmt, Zugfestigkeit und Bruchdehnung nach DIN/ISO 527, Weiterreißfestigkeit nach DIN 53515.

**Tabelle 1**

| **Isocyanat** | **Polyether*** | **NCO-Gehalt** | **NCO/NH₂** | **Topfzeit** | **Zugfestigkeit** | **Bruchdehnung** | **Weiterreißfestigkeit** | **Härte** |
|---|---|---|---|---|---|---|---|---|
| | **(Acclaim)** | **[Gew.-%]** | **Verhältnis** | **[Min]** | **[N/mm²]** | **[%]** | **[N/mm]** | **[Shore A]** |
| TDI | 2200/4200=1/9 | 2,0 | 1,05 | 45 | 11,3 | >1500 | 24,7 | 52 |
| TDI | 2200/4200=1/9 | 2,0 | 1,2 | 45 | 9,5 | 890 | 18,9 | 55 |
| IPDI | 2200/4200=1/2 | 2,2 | 1,05 | 60 | - | - | - | 55 |
| IPDI | 2200/4200=1/2 | 2,2 | 1,2 | 60 | - | - | - | 59 |
| IPDI | 2200/4200=1/9 | 1,7 | 1,05 | 70 | 18,1 | 1040 | 18,6 | 52 |
| IPDI | 2200/4200=1/9 | 1,7 | 1,2 | 70 | 18 | >900 | 16,3 | 49 |
| IPDI | 4200/6300=9/1 | 1,9 | 1,05 | 60 | >10 | >1340 | 20,8 | 48 |
| IPDI | 4200/6300=9/1 | 1,9 | 1,2 | 60 | 8 | 863 | 15,3 | 51 |
| IPDI | 4200/6300=7/3 | 1,8 | 1,05 | 60 | 7,5 | 826 | 12,7 | 49 |
| IPDI | 4200/6300=7/3 | 1,8 | 1,2 | 60 | 4,8 | 498 | 8,2 | 52 |
| IPDI | 4200/6300=6/4 | 1,9 | 1,05 | 60 | 3,7 | 407 | 9,8 | 54 |
| IPDI | 4200/6300=6/4 | 1,9 | 1,2 | 60 | 3,4 | 365 | 10,2 | 48 |
| IPDI | 4200/6300=5/5 | 1,8 | 1,05 | 60 | 3,9 | 450 | 10,1 | 51 |
| IPDI | 4200/6300=5/5 | 1,8 | 1,2 | 60 | 3,5 | 335 | 8,6 | 54 |

| | | | | | | | | |
|---|---|---|---|---|---|---|---|---|
| * Verhältnis der Polyether im Gemisch basierend auf Äquivalent-Gewicht | | | | | | | | |

## Patentansprüche

1. Zweikomponenten-Beschichtungssystem, umfassend
(i) ein freie Isocyanatgruppen aufweisendes Prepolymer mit einem NCO-Gehalt von 0,4 bis 12 Ges.-%, erhältlich durch Umsetzung eines Di- oder Polyisocyanats mit einem oder mehreren durch Alkoxylierung hydroxyfunktioneller Startermoleküle in Gegenwart von Doppelmetallcyanid-Katalysatoren erhältlichen Polyoxyalkylenpolyolen mit einer mittleren Hydroxyfunktionalität von 1,96 bis 6 und einem Äquivalentgewicht von mindestens 250 g/Mol, und
(ii) ein di-primäres aromatisches Diamin, das in ortho-Position zu jeder Aminogruppe mindestens einen Alkylsubstituenten mit 2-3 Kohlenstoffatomen aufweist.

2. Beschichtungsmittel, erhältlich durch Umsetzung der Komponenten (i) und (ii) des Zweikomponenten-Beschichtungssystems gemäß Anspruch 1 in einem Mengenverhältnis, das einem NCO/NH₂-Äquivalentverhältnis von 0,5:1 bis 1,5:1 entspricht.

3. Verfahren zur Herstellung elastischer Beschichtungen, bei dem die Komponenten des Zweikomponenten-Beschichtungssystems gemäß Anspruch 1 vermischt werden in einem Mengenverhältnis, das einem NCO/NH₂-Äquivalentverhältnis von 0,5:1 bis 1,5:1 entspricht, die Mischung auf ein Substrat aufgetragen und anschließend ausgehärtet wird.

4. Durch Ausreagieren des Beschichtungsmittels gemäß Anspruch 2 erhältliches Polyhamstoff-Polymer.

## Claims

1. A two-component coating system, comprising
(i) a prepolymer comprising free isocyanate groups with an NCO content of 0.4 to 12 wt.%, obtainable by reacting a di- or polyisocyanate with one or more polyoxyalkylene polyols with an average hydroxy functionality of 1.96 to 6 and an equivalent weight of at least 250 g/Mol obtainable by alkoxylation of hydroxyfunctional starter molecules in the presence of double metal cyanide catalysts, and
(ii) a di-primary aromatic diamine, which comprises at least one alkyl substituent with 2-3 carbon atoms in ortho position relative to each amino group.

2. A coating composition, obtainable by reacting the components (i) and (ii) of the two-component coating system according to claim 1 in a proportion which corresponds to an NCO:NH₂ equivalent ratio of 0.5:1 to 1.5:1.

3. A method of producing elastic coatings, in which the components of the two-component coating system according to claim 1 are mixed in a proportion which corresponds to an NCO:NH₂ equivalent ratio of 0.5:1 to 1.5:1, the mixture is applied to a substrate and then cured.

4. A polyurea polymer obtainable by reacting the coating composition according to claim 2 to completion.

## Revendications

1. Composition de revêtement à deux composants comprenant
(i) un prépolymère à groupes isocyanates libres, à une teneur en NCO de 0,4 à 12 % en poids, obtenu par réaction d'un di- ou poly-isocyanate avec un ou plusieurs poly-oxyalkylène-polyols obtenus eux-mêmes par alcoxylation de molécules de départ à fonctions hydroxy en présence de catalyseurs du type cyanure métallique double, qui ont une fonctionnalité moyenne en groupes hydroxy de 1,96 à 6 et un poids équivalent d'au moins 250 g/mol, et
(ii) une diamine aromatique diprimaire portant au moins un substituant alkyle en C₂-C₃ en position ortho de chaque groupe amino.

2. Produit de revêtement obtenu par réaction des composants (i) et (ii) de la composition de revêtement à deux composants selon la revendication 1 dans des proportions relatives correspondant à un rapport de 0,5 : 1 à 1,5 : 1 entre les équivalents de NCO et les équivalents de NH₂.

3. Procédé pour l'application de revêtements élastiques dans lequel on mélange les composants de la composition de revêtement à deux composants selon la revendication 1 dans des proportions relatives correspondant à un rapport de 0,5 : 1 à 1,5 : 1 entre les équivalents de NCO et les équivalents de NH₂, on applique le mélange sur un support puis on le durcit.

4. Polyurée polymère obtenue par réaction du produit de revêtement selon la revendication 2.
